# EUROPEAN PATENT APPLICATION

(11) **EP 4 566 931 A1**
(43) Date of publication of application: **11.06.2025**
(21) Application number: 23214887.4
(22) Date of filing: 07.12.2023
(51) Int. Cl.: B63B 27/10, B63B 35/00, F03D 13/10

(54) **VESSEL AND METHOD FOR INSTALLING AN ELONGATED ELEMENT IN AN UNDERWATER BOTTOM**

(71) Applicant: DEME Offshore BE NV, 2070 Zwijndrecht (BE)
(72) Inventor: Beilan, Joshua Tyson, 2100 Deurne (BE); Vannieuwenhuyse, Kenneth, 2950 Kapellen (BE); Rabaut, Dieter, 9000 Gent (BE)
(74) Representative: IP HILLS NV

(57) **Abstract**

Vessel (100) for installing an elongated element (600) in an underwater bottom (205), the vessel (100) comprising:
- a hull (115) comprising a front wall (116), a back wall (117), and two opposing side walls (101, 102);
- a deck (105) adapted to support one or more elongated elements (600);
- a hoisting device (106) positioned on the deck (105),
wherein the hull (115) comprises a recess (103) provided in a side wall (101), the recessed portion (104) of the side wall defining a channel (103) ending at its top end in a cutout (300) in the deck (105), and providing vertical access (204) from the cutout (300) to the underwater bottom (205), the recess (103) in the side wall (101) allowing the elongated element (600) to be lowered into the underwater bottom via the channel (103), while being connected at one end (602) to the hoisting device (106).

## Description

### Field of the Invention

The present invention generally relates to a vessel and method for installing elongated elements in an underwater bottom, e.g. foundation piles of offshore wind turbines like monopiles or piles of jacket foundations. In particular, a vessel and installation method are presented, allowing mitigation of the risk of detrimental consequences due to pile runs during installation, while avoiding increased cycle times and raised costs per monopile.

### Background of the Invention

In various offshore applications, sizeable elongated or tubular elements need to be driven into the seabed, e.g. for installing foundation structures of offshore wind turbines, jetties, radar and other towers, and the like. With respect to offshore wind turbines, foundations come in a number of variants, including monopile foundations and jacket foundations. Monopiles typically comprise a hollow cylindrical structure of steel or concrete which can have a length of up to 100 m and more, a diameter of up to 12 m and more, and a weight which can rise up to 2000 tons and more. A lower end of the monopile is driven into the underwater bottom, while the upper end is provided with a transition piece forming the connection to a turbine mast arranged on the monopile. In use, a large part of the monopile foundation is thus located under water, and its slender design allows to bridge the height difference with the underwater bottom. Jacket foundations comprise a lattice framework, wherein the legs of the lattice framework are anchored to the seabed with piles, these foundation piles being driven into the underwater bottom. Given the continued trend of wind turbines growing in size, offshore foundations become larger and heavier, thereby putting additional challenges on their installation in the seabed.

Installing an elongated element such as a pile foundation for an offshore wind turbine typically takes place from the deck a vessel, which may be a jack-up vessel or a floating vessel. While jack-up vessels - due to their anchoring legs - ensure limited motion of the vessel, they entail restrictions with respect to height and size; installing increasingly large and heavy monopiles typically requires installation from a floating vessel. Installation may happen from the aft of the vessel, or from the side. In the latter case, e.g. being described in EP3517479A1, the monopile is placed outboard of the vessel's side shell, thereby allowing for reduced pitch motions at the installation spot compared to an installation from the aft of the vessel.

In a typical installation sequence, a monopile lying on the deck of the vessel is first brought into vertical position by means of a hoisting device such as a crane. Next, the monopile is lowered towards the seabed, while being suspended from the crane, and it may penetrate the underwater bottom under its own weight. After decoupling the pile from the crane, the monopile is further driven into the bottom by means of a hammering tool arranged at the upper end of the monopile, the hammering tool being suspended from the crane. During installation, the transverse and longitudinal position of the monopile, and its roughly vertical orientation, are controlled by a pile gripper connected to the vessel.

A major concern associated with installing foundation piles into a seabed is the risk of a pile run. A pile run or pile drop is a sudden free fall of the pile during insertion into the underwater bottom, due to layering in the soil. Typically, the seabed consists of multiple layers of soil, having varying bearing capacities, e.g. layers of sand and clay. A pile run typically arises when the bearing capacity of the soil is insufficient to counteract the imposed load. For example, when transitioning from a hard soil layer to a soft one, the soil resistance suddenly decreases, and the pile drops due to the soft layer failing to counteract the weight of the monopile. A pile run may occur during lowering the pile into the bottom under its own weight, while being connected with its upper end to the crane. A pile run may also occur when placing the hammering tool onto the pile, wherein a soil layer offers insufficient capacity to bear the combined weight of the pile and hammer, or when driving the pile into the seabed by means of hammering. As foundation piles continue to grow in size, soft soil layers that would traditionally provide adequate bearing capacity for smaller monopiles can now pose a pile run risk when dealing with much larger monopiles.

Pile runs may result in an uncontrolled installation, and damage to the pile or infrastructure. Moreover, in case of a pile run while the pile is still connected to the crane, suddenly the full weight of the foundation pile is transferred back to the crane, thereby exerting a shock load on the crane. Similarly, in case of a pile run when placing the hammering tool onto the pile, the weight of the hammer is abruptly transferred to the crane. Protection against potential overloads to the crane may be obtained by means of shock absorbers. However, more seriously, when installing piles from the side of a floating vessel, the sudden load on the crane may bring the vessel's floating equilibrium out of balance, wherein the vessel tends to tilt about its longitudinal axis, thereby causing unacceptable list. Excessive listing exposes the vessel, personnel and equipment to high risk, and may even lead to capsizing of the ship.

In the prior art, solutions have been proposed to mitigate the risk of pile runs. For example, geotechnical installation risks at specific locations may be studied, along with recommendations relating to hammer operation. Other solutions make use of specific driving equipment, e.g. vibro-driving technology ensuring a smooth penetration into the seabed, or use specifically designed monopiles, e.g. having sacrificial rings. In yet other solutions, specific measures are proposed to control the pile's movement and stability during penetration, e.g. by using hydraulic clamping systems or controlling the pile's buoyancy during installation. A drawback of these known mitigation measures is that they are expensive and/or slow. In particular, ensuring an installation wherein pile runs are prevented typically increases the installation time of an individual pile, thereby substantially increasing the cost per monopile.

It is an objective of the present invention to disclose a solution for installing elongated elements into an underwater bottom that resolves one or more of the above-described shortcomings of the prior art solutions. More particularly, it is an objective to present a vessel and installation method that allow mitigation of the risk of detrimental consequences due to pile runs during installation, while avoiding increased cycle times and raised costs per monopile.

### Summary of the Invention

According to a first aspect of the present invention, the above identified objectives are realized by a vessel suitable for installing an elongated element in an underwater bottom, defined by claim 1, the vessel comprising:
- a hull comprising a front wall at the bow of the vessel, a back wall at the stern of the vessel, and two opposing side walls, positioned between the front wall and the back wall;
- a deck adapted to support one or more elongated elements, the deck lying in a horizontal plane extending in longitudinal direction, from bow to stern, and in transverse direction, from side to side, the vertical direction being perpendicular to the horizontal plane;
- a hoisting device positioned on the deck, adapted to hold the elongated element at one end while lowering the elongated element,
wherein the hull comprises a recess provided in a side wall, the recessed portion of the side wall defining a channel ending at its top end in a cutout in the deck, and providing vertical access from the cutout to the underwater bottom, the recess in the side wall allowing the elongated element to be lowered into the underwater bottom via the channel, while being connected at one end to the hoisting device.

Thus, the invention concerns a vessel, also referred to as a ship or boat. The vessel is suitable for installing an elongated element in an underwater bottom. An underwater bottom refers to a ground, soil structure or any other type of structure located underwater. For example, the underwater bottom may be a seabed, river bottom, a layer of stones or rocks e.g. serving as a scour protection layer, or any other type of structure found in a water environment. Also combinations are possible, e.g. an underwater bottom consisting of a layer of stones lying on the seabed. An elongated element refers to a slender object like a tubular element, pipe or pile. For example, it is a monopile serving as a foundation structure of an offshore wind turbine, or a leg connected to the lattice framework of a jacket foundation. Although the invention will be elucidated with reference to offshore wind turbines, in particular to installation of monopiles, it is equally applicable to the installation of other types of elongated elements, e.g. foundation structures or components of jetties, radar towers, other towers, and the like.

The vessel comprises a hull, being the main watertight body of the ship, the hull typically comprising an outer structure composed of shell plating, and at least partly being covered with a deck. The hull comprises a front wall, located at the front side or bow of the vessel, and a back wall, located at the back side or stern of the vessel. The front wall typically comprises two curved portions, also referred to as port bow and starboard bow, which come together in a pointed or rounded tip at the front side of the hull. The back wall typically has a straight or slightly curved edge, e.g. substantially perpendicular to the longitudinal direction. The hull further comprises two opposing side walls, positioned between the front wall and the back wall, including a side wall located at starboard side and a side wall located at port side. The first side wall and the second side wall each are connected to the front wall and to the back wall. The side walls may also be referred to as side shell.

The longitudinal direction corresponds to the direction of the longitudinal axis of the vessel, from stern to bow, and a length dimension of the vessel is measured along the longitudinal direction. The transverse direction corresponds to the direction of the transverse axis of the vessel, from side to side, and a width dimension of the vessel is measured along the transverse direction. The longitudinal and transverse direction together define a horizontal plane, being the plane wherein the deck is mainly extending. The direction perpendicular to the horizontal plane is the vertical direction, corresponding to the direction of the vertical axis of the vessel, and a height dimension of the vessel is measured along the vertical direction. The longitudinal centreline of the vessel corresponds to the straight middle line running in longitudinal direction from bow to stern, midway between the sides of the vessel. Whenever a direction of the elongated element or of a vessel's component or part is mentioned, being substantially in a particular direction refers to a deviation of at most 20%, more preferably at most 10%, still more preferably at most 5%, and most preferably at most 0,5% with respect to the indicated direction.

The deck of the vessel is adapted to support one or more elongated elements, implying that means are provided for receiving, supporting, holding or carrying elongated elements. Typically, multiple support structures are provided, enabling to support multiple monopiles on the deck. Typically, elongated elements of substantial length like monopiles are stored in lying position, e.g. substantially horizontal, on the deck, the support structures thus being adapted to receive an elongated element in lying position. However, other types of elongated elements, e.g. of limited length, may be stored in upright or vertical position. The vessel is thus suitable to sail towards a specific location, onboard one or more elongated elements supported on the deck, and, at that location, install the elongated elements in the underwater bottom, wherein an elongated element waiting for installation is still held in the corresponding support structure.

The vessel further comprises a hoisting device positioned on the deck, adapted to hold the elongated element at one end while lowering the elongated element. A hoisting device, also referred to as a lifting means or crane, typically comprises a crane arm or boom provided with hoisting cables, the crane arm being mounted onto a crane base, wherein the crane arm may be rotated with respect to the base, and the free end of the arm may be moved up and down. Typically, the hoisting device serves different purposes on the vessel, for which specific equipment may be attached to the hoisting cables. Within the context of the invention, the hoisting device at least allows for lowering an elongated element towards the underwater bottom, the elongated element being suspended from the hoisting device and being in upright or substantial vertical position. In this, the upper end of the elongated element is held by the hoisting device, while the opposing lower end of the elongated element is free and moves towards the underwater bottom. For connecting the upper end to the hoisting device, a specific coupling tool may be used, e.g. having arms engaging with the interior or exterior surface of the element's upper end. Also, after reaching the underwater bottom, in a first phase of inserting the lower end of the element into the bottom, the upper end of the elongated element is typically still connected to the crane, while the lower end penetrates the bottom. Apart from such a lowering action, the hoisting device may be equipped for other purposes, e.g. for taking up an elongated element from the deck in horizontal position, for upending an elongated element from a lying to an upright position, for taking up and placing a hammering tool, etc.

The hull of the vessel comprises a recess, the recess being provided in a side wall of the hull. Thus, at the location of the recess, the side surface of the hull is recessed with respect to the rest of the hull side. The recessed portion of the side wall defines a channel ending at its top end in a cutout in the deck, and providing vertical access from the cutout to the underwater bottom. Thus, the channel defined by the recess has two open ends: one open end at its upper side, provided as a cutout or opening in the deck, and another open end at its lower side. Depending on the design of the hull, the channel may extend over the complete height of the hull, or over a portion thereof. In any case, the channel defined by the recess offers vertical access to the underwater bottom, meaning that an object may be lowered via the cutout and the recess, according to a vertical direction, for reaching the underwater bottom. In particular, the recess is such that an elongated object, to be installed in the underwater bottom, may be lowered from the deck towards and into the underwater bottom via the recessed channel, the channel thus being adapted to receive an elongated element. For this purpose, the dimensions of the recessed channel, seen in a horizontal plane, are such that an elongated element can, at least partially, be positioned inside the recess. In particular, according to the longitudinal direction, the cutout and recess are large enough for receiving an elongated element. According to the transverse direction, the cutout and recess may allow an elongated element to be positioned fully inside the recess, without extending beyond the rest of the side wall, or only partially, wherein the elongated element partially extends beyond the non-recessed portion of the side wall.

Furthermore, the recess in the side wall is suitable for lowering the elongated element into the underwater bottom via the channel, while the elongated element is connected at one end to the hoisting device. The recess and hoisting device are thus positioned such that lowering of the elongated element may happen while being connected with its upper end to the hoisting device. The recess is thus suitable for lowering the elongated element in the water, towards the bottom, while being suspended from the crane, and is suitable for lowering the elongated element in the bottom, in the first phase of penetration, while still being connected at one end to the crane. Typically, the recessed channel is also usable for a next phase of driving the elongated element into the bottom with e.g. a hammering tool, wherein the elongated element is decoupled from the hoisting device, and is only indirectly connected to the hoisting device, via the arranged hammering tool.

Providing a recess in the side wall of the hull brings the advantage that, whenever a pile run may occur, the risk of detrimental consequences is substantially reduced. Indeed, if a shock load is exerted to the hoisting device following a pile run, e.g. when the full weight of a monopile is suddenly transferred back to the hoisting device, the resulting list of the floating vessel will be less, since the monopile installation position is brought towards the ship's centreline compared to traditional approaches that place the monopile outboard the vessel's side shell. The same applies when the weight of e.g. a hammering tool is suddenly transferred to the hoisting device following a pile run. Accordingly, due to the recess, the list caused by a pile run is reduced to an acceptable level, thereby preventing the problem of unequal floating equilibrium and avoiding corresponding risks for vessel, equipment and personnel.

The invention thus offers an adapted design of the vessel, allowing to alleviate consequences of an occurring pile run. This is another approach then prior art mitigation measures, which try to prevent the occurrence of a pile run, but still may suffer from severe consequences should a pile run nonetheless occur. In this, choosing for such prior art mitigation measures would be more straightforward, as it does not affect the design of the vessel, in particular of its hull. Indeed, using a recessed side wall impacts the design of the hull, thereby deviating from traditional optimized steel distribution in the hull, and possibly increasing the investment cost of the vessel. Moreover, due to the recess, an asymmetric hull is obtained, thus deviating from the known streamlined hull design and introducing additional sailing resistance. However, this non-obvious asymmetric vessel design offers important advantages in terms of reducing operational risks upon occurring pile runs, without requiring specific expensive equipment onboard of the vessel. Moreover, common monopile designs may still be used, and installation cycle times are not affected, thereby avoiding that the cost per monopile would be increased.

Optionally, the longitudinal position of the cutout in the deck is such that, measured at deck level along the longitudinal centreline of the vessel, the distance between the stern of the vessel and the transverse middle line of the cutout is between 10% of the vessel's length and 75% of the vessel's length, preferably between 15% and 65%, more preferably between 20% and 55%, more preferably between 25% and 45%. The transverse middle line of the cutout corresponds to a straight line in transverse direction splitting the cutout at the deck in two portions of equal area. The point at which the transverse middle line of the cutout intersects the longitudinal centre line of the vessel, at deck level, is considered as the location spot of the cutout. Along the longitudinal centreline, at deck level, the stern of the vessel is located at 0% of the vessel's length, while the bow's tip end is located at 100% of the vessel's length. The location spot of the cutout is between 10% and 75%, which e.g. implies that the cutout is found in the deck area bordered by straight parallel side edges. In more preferred embodiments, the cutout is positioned rather centrally, with a location spot between 15% and 65%, between 20% and 55%, or between 25% and 45%. This has the advantage that the cutout and recess are positioned closer to a location spot at 1/3, or 33%, corresponding to the longitudinal location where pitch motions of the vessel are small, thus allowing for reduced crane tip motions and facilitating installation of the monopile. On the other hand, bringing the cutout closer to a location spot at 1/2, or 50%, has the advantage that possible interactions with flow resulting from the thrusters may be minimized. The aforementioned location spot is defined at deck level. In possible embodiments, the same ranges may apply for location spots at another, or at any other, height position, i.e. with respect to the location spot of the recessed channel intersected with a horizontal plane at a specific height.

Optionally, in transverse direction, the recess does not extend beyond the longitudinal centreline of the vessel. This means that the depth of the recess, measured in transverse direction, is small enough, such that the opening defined by the cutout in the deck does not cross the longitudinal centreline of the vessel. In other words, when considering the vessel's longitudinal centreline splitting the deck in two halves, the cutout, and corresponding recess, are completely located in one half. Advantageously, this avoids that the central longitudinal beam or bulkhead of the vessel would be interrupted, and thicker steel plates would be required to ensure structural strength.

Optionally, the cutout in the deck is fully or mainly located in the deck zone at one side of the longitudinal centreline of the vessel, and the base of the hoisting device is fully or mainly located in the deck zone at the other side of the longitudinal centreline. Thus, when considering the vessel's longitudinal centreline splitting the deck in two halves, the cutout in the deck, and corresponding recess, is fully located in the first half, the area of the cutout not extending beyond the longitudinal centreline, or is mainly located in the first half. In the latter case, the cutout's area is partly in the second half, but for the most part in the first half. On the other hand, the base of the hoisting device, or the crane's footprint, is fully located in the second half, or is mainly located in the second half, wherein in the latter case the footprint's area is partly in the first half but for the most part in the second half. In an embodiment, this implies that the vertical rotational axis of the hoisting device crosses the second half of the deck, while a vertical central axis of the recessed channel crosses the first half of the deck. The cutout and hoisting device are thus positioned in opposing deck zones, implying that they cannot be located next to each other, seen according to the longitudinal direction. This has the advantage that structural issues are avoided, as the heavy crane is not positioned next to the spot where material has been cut out. Moreover, it brings the advantage that, according to the longitudinal direction, the presence of the recess does not require the crane to be moved towards a position further away from the deck zone where typically the elongated elements are stored. Accordingly, the same crane as in a classical setup can still be used, while still maintaining the crane's capacity to reach the monopiles lying furthest away.

Optionally, the width of the channel defined by the recess increases, at least over a portion of the height of the channel, towards the bottom end of the channel, the width of the channel being measured in longitudinal direction of the vessel, and the height of the channel being measured in vertical direction of the vessel. The recess thus has a widened shape towards the bottom side, i.e. in a direction from the deck to the water level. In an embodiment, this may be accomplished by inclined or curved surfaces comprised in the recessed portion of the side wall, of which the direction deviates from the vertical and horizontal direction. For example, these inclined or curved surfaces are at the bottom part of the recessed side wall, while the upper part of the recessed side wall comprises straight surfaces in vertical direction. Such inclined or curved surfaces allow for a smoother flow during sailing, thereby alleviating the increased sailing resistance caused by the recess.

Optionally, the channel comprises, in vertical direction from the top end at the deck towards the bottom end, a first portion and an adjacent second portion, the first portion having a constant width over the height, and the second portion having a continuously increasing width towards the bottom end of the channel. The channel thus has a second tapered portion, following a first non-tapered portion. In an embodiment, the recessed portion of the side wall comprises two opposing wall parts, wherein each of those wall parts comprises a first portion parallel to the vertical direction, and a second lower portion provided as an inclined or curved surface being angled with respect to the vertical and horizontal direction. In this way, the upper part of the recess can be kept limited in width, thus not taking away more material than necessary, while the widened lower part allows for a decreased sailing resistance.

Optionally, the vessel is suitable for installing elongated elements of which the largest cross section along the length, amounts up to a maximum section size. Typically, the vessel allows for installation of elongated elements, e.g. monopiles, of various diameters. Every monopile typically has a varying diameter along its length, and therefore has a largest cross section along its length. Considering this largest cross section for the group of monopiles that may be installed with the vessel, the maximum section size that may occur among the various piles is the maximum section size that can be handled by the vessel. For example, the vessel is suitable for installing monopiles with highest cross section between 8 and 12 m, the maximum section size thus being 12 m. The recess is adapted for positioning an elongated element of maximum section size inside the recess, such that in transverse direction, the elongated element does not extend beyond the non-recessed portion of the side wall, at least over a portion of the height of the hull. This implies that a pile with maximum section size, e.g. a monopile of which the largest cross section along its length is 12 m, can be positioned fully inside the recessed channel, when viewed according to a horizontal section. In other words, the size of the recess is such that a pile with maximum section size fits inside, according to the transverse and longitudinal direction.

Optionally, the vessel comprises a gripping device, connected to the hull and/or the deck, adapted to guide the elongated element during installation. The gripping device comprises an openable and re-closable gripping structure adapted to, in closed condition, at least partially surround the circumference of the elongated element, while engaging with the lateral surface of the elongated element. The lateral surface refers to all of the sides of the element, excluding its base and top, e.g. the curved outer surface of the monopile extending between the top end and lower end of the pile. In an embodiment, the gripping structure comprises two arms, which, after closing, together form a closed ring structure surrounding the monopile. The gripping device is connected to the deck and/or hull, e.g. connected to the edge of the cutout in the deck. In an embodiment, the gripping device may be integrated in a device that also serves for upending the monopile. In another embodiment, the gripping device and upending device are provided as separate devices. In an embodiment, the gripping structure is collapsible, e.g. being pivotably connected to the edge of the vessel, wherein pivoting around a longitudinal axis allows for folding and unfolding of the gripping structure. In unfolded condition, the gripping structure may be located inside the recessed channel, or may be located at a higher position, above deck level. During lowering of the monopile, the gripping structure engages with the lateral surface of the monopile, thereby allowing to adjust the monopile's position in transverse and longitudinal direction, e.g. for keeping the monopile centred within the gripping structure and controlling its roughly vertically orientation; only after the monopile has reached a sufficient depth, the monopile is decoupled from the gripping device. For controlling purposes, the gripping device may comprise guiding arms placed along the inner circumference of the gripping structure, e.g. being provided as rollers or roller boxes. Furthermore, in an embodiment, the gripping device may comprise an actuator system allowing to translate the gripping structure relative to the hull, thereby compensating for vessel motions. In particular, the gripping device is adapted for guiding elongated elements of which the largest cross section along the length is between a minimum and maximum section size, the design of the gripping device thus revealing the vessel's suitability for installing monopiles of various diameters. An example of a gripping device is described in EP3517479.

Optionally, the recess is adapted for positioning the closed gripping structure inside the channel defined by the recess. This implies that the size of the cutout and recess are such that, at least according to the longitudinal direction, the closed gripping structure fits inside. In an embodiment, the recess is such that in transverse direction, the closed gripping structure does not extend beyond the non-recessed portion of the side wall. In this case, the gripping structure is brought completely inside the vessel's side shell. In other words, the size of the cutout and recess are such that the closed gripping structure fits inside, according to the transverse and longitudinal direction. According to the vertical direction, the closed gripping structure, during installation of an elongated element, may be fully located inside the recessed channel, or only partially.

Optionally, the recess allows the gripping structure to be opened while being positioned inside the recess. This implies that the size of the cutout and recess are such that, at least according to the longitudinal direction, the opened gripping structure fits inside. In an embodiment, the recess is such that in transverse direction, the opened gripping structure does not extend beyond the non-recessed portion of the side wall. In other words, the size of the cutout and recess are such that the opened gripping structure fits inside, according to the transverse and longitudinal direction. According to the vertical direction, the opened gripping structure, during installation of an elongated element, may be fully located inside the recessed channel, or only partially.

Optionally, the vessel comprises a dynamic positioning or mooring system, adapted to control the position of vessel while floating, wherein the positioning accuracy is such that an offset applies between the actual position of the vessel and the target position, and wherein the size of the recess is such that, upon occurring maximal offset in the vessel's position, a margin exists between the outer contour of the closed gripping device and the recessed side wall. A dynamic positioning or mooring system is a control system allowing to keep the vessel in a relatively constant position relative to the underwater bottom, without using spud poles like in a jack-up vessel. The position of the vessel is kept constant within some tolerances, wherein typically an offset is present between the actual position of the vessel and its target position. A typical positioning system has a footprint of 2 to 3 m. In particular, the positioning system is adapted for keeping this offset lower than a maximum value, the latter being the maximum offset of the dynamic positioning or mooring system. Typically, the gripping structure may move within the vessel's footprint, e.g. by sliding on a structure connected to the deck, thereby keeping the pile in a world-fixed position. The size of the recess is such that in any case, even when the maximal offset in the vessel's position applies, still some margin exists between the outer contour of the closed gripping device and the recessed side wall. In other words, when the vessel moves away from its target position, while the position of the pile remains fixed due to being partly inserted in the bottom, the recess is large enough to ensure that the gripping structure does not come into contact with the recessed side wall.

Optionally, the width of the cutout is at least 35 meter, preferably at least 40 meter, more preferably at least 45 meter, the width being measured in longitudinal direction of the vessel, and measured at the transverse position furthest away from the longitudinal centreline. The width of the cutout is thus being measured at the transverse position where the non-recessed portion of the side wall is connected to the recessed portion of the side wall. At other transverse positions, the cutout may have the same width, or a smaller or larger width may apply.

Optionally, the recess is provided in the first side wall, and the second opposing side wall does not comprise such a recess. The second side wall may thus be according to a traditional streamlined design, while only the first side wall comprises a recessed portion, thereby resulting in an asymmetrical shape of the hull.

Optionally, the recessed portion of the side wall comprises two opposing wall parts, each extending from the side of the vessel comprising the recess towards the other side wall not comprising the recess. The two opposing wall parts thus run from side to side. In an embodiment, the two opposing wall parts both are parallel to the transverse direction of the vessel.

Optionally, the cutout in the deck is delimited by an edge comprising a central edge parallel to the longitudinal direction of the vessel, and two opposing side edges parallel to the transverse direction of the vessel, each of the side edges connected to the central edge via an intermediate straight edge, of which the direction is angled with respect to the longitudinal and transverse direction. Accordingly, the shape of the cutout does not comprise sharp or straight angles, thereby limiting occurring material stresses.

Optionally, in an embodiment, the recess extends over the full height of the hull, the height of the channel, measured in vertical direction thus being equal to the height of the hull. In another embodiment, the recess extends over a part of the height of the hull, the height of the channel, measured in vertical direction, thus being smaller than the height of the hull.

Optionally, the vessel comprises one or more doors, adapted to be closed during sailing, thereby at least partly shielding the recess in the side wall. The vessel thus comprises one or more openable and re-closable doors. The one or more doors allow to fully or partially close off the open front side of the recessed channel, in particular during sailing. In an embodiment, the one or more doors are such that, in closed condition, they are aligned with the non-recessed portion of the side wall. According to the vertical direction, the one or more doors may extend over the full height of the hull, or only over a portion thereof. The one or more doors may be closed during sailing, thereby contributing to a reduced sailing resistance. Once arrived at the installation location, the one or more doors may be opened, allowing the recess to be used for installation purposes.

Optionally, the vessel comprises two doors, each of the doors being connected to the side wall and being pivotable around a vertical axis, the two doors being adapted to, in closed condition, together shield the recess. Typically, the first door allows for a clockwise rotation for opening the door, and the second door allows for an anticlockwise rotation for opening the door. For example, two doors of the same size are provided, positioned next to each other in closed condition, wherein the left door is connected with its left edge to the side wall, and the right door is connected with its right edge to the side wall.

Optionally, the deck comprises an area, in transverse direction extending between the recessed side wall and the opposing side wall, which provides room for positioning an elongated element before installation, with its axis in transverse direction. Typically, such installation area provides space for positioning a lying elongated element before upending. Accordingly, the hoisting device cannot be placed in this area.

Optionally, the vessel comprises means adapted for supporting one or more elongated elements, the one or more elongated elements positioned with their axis in transverse direction, the supporting means being installed at the deck, in a zone which in longitudinal direction extends between the cutout and the front wall of the hull. The supporting means are adapted to carry elongated elements in lying position, during sailing or while waiting for installation. A forward storage zone at the deck allows to store lying elongated elements, with their axis in transverse direction,

Optionally, the vessel comprises a upending device, connected to the hull and/or the deck, adapted to pivot the elongated element from a horizontal position towards an upright position, while supporting the elongated element by engaging with the lateral surface of the elongated element. Typically, the upending device comprises a cage-like structure, adapted for receiving the first end of the elongated element, and support the elongated element during upending. Upending typically is established by means of a crane or hoisting device, wherein the second end of the elongated element is held by the crane during pivoting. An example of a upending device is described in EP3517479.

Optionally, the vessel comprises means for driving the elongated element into the underwater bottom. Such means are for example a hydraulic hammering unit, a hydraulic impact hammer, a vibro-hammer, a drilling unit or any other suitable equipment. A hammering tool is typically picked up by the crane at one end, and next positioned on top of the upright elongated element, for driving the pile into the bottom. In this condition, the monopile is still in connection with the hoisting device via the arranged hammering tool. In a preferred embodiment, the elongated element is guided by the gripping device while being driven into the underwater bottom to a certain depth.

Optionally, the elongated element is a foundation structure, e.g. a monopile of a wind turbine.

According to a second aspect of the present invention, there is provided a method for installing an elongated element in an underwater bottom from a floating vessel, the method comprising:
- providing a vessel according to the first aspect of the invention;
- providing an elongated element extending in length direction between a first end and a second end;
- lowering the elongated element via the channel, the elongated element at least partially being positioned inside the recess, thereby inserting the first end of the elongated element into the underwater bottom, while the second end is connected to the hoisting device.

The second aspect of the invention thus concerns an installation method, wherein the invented vessel, comprising the recessed side wall, is used during installation of an elongated element. The same definitions apply as given above in respect of the first aspect of the invention. During installation, after bringing the elongated element in upright position, the elongated element is first lowered into the water, towards the bottom, while being suspended from the hoisting device. When reaching the bottom, the elongated element is further lowered, thereby penetrating the bottom under its own weight, while still being connected to the hoisting device at one end. During lowering, the elongated element is at least partially inside the recessed channel, wherein according to the transverse direction, the elongated element may be fully positioned inside the recess, or may partially extend beyond the non-recessed portion of the side wall.

Optionally, the installation method comprises taking up an elongated element from a storage zone at the deck by means of the hoisting device, and positioning it, with its axis in transverse direction, in an installation area at the deck, wherein a portion of the elongated element hangs over the cutout in the deck.

Optionally, the installation method comprises pivoting an elongated element from a lying position to an upright position, by means of a upending device, wherein one end of the elongated element is supported by the upending device, and the other end is held by the crane during pivoting.

Optionally, the installation method comprises closing the gripping structure of a gripping device, such that the closed gripping structure at least partially surrounds the circumference of the elongated element, and guiding the elongated element during lowering, wherein the closed gripping structure engages with the lateral surface of the elongated element. Guiding the elongated element by means of the gripping device may continue until a particular penetration depth is reached, after which the gripping structure may be opened.

Optionally, the installation method comprises driving an elongated element into the underwater bottom by means of a driven device, e.g. a hammering tool. Before arranging the driven device, the elongated element may be decoupled from the hoisting device. During driving the elongated element into the bottom, the elongated element may be guided by a gripping structure, until a particular penetration depth is reached, after which the gripping structure may be opened and the elongated element may further be driven into the bottom by means of the driven device.

### Brief Description of the Drawings

Fig. 1 to 3 show a vessel according to an embodiment of the invention, wherein Fig. 1 gives a 3D view, Fig. 2 a side view and Fig. 3 a top view.
Fig. 4 gives a closer view of the recess comprised in the vessel of Fig. 1.
Fig. 5 illustrates different designs of the hull and recess.
Fig. 6 and Fig. 7 show the vessel of Fig. 1, used for installation of a monopile, the monopile being in lying position before upending. Fig. 6 gives a 3D view and Fig. 7 gives a top view.
Fig. 8 to 10 show the vessel of Fig. 1, used for installation of a monopile, the monopile being lowered via the channel defined by the recess.
Fig. 11 and Fig. 12 show a vessel according to an embodiment of the invention, used for installation of a monopile, illustrating a state with lying monopile and with suspended monopile, and including stored monopiles at the deck. Fig. 11 gives a side view and Fig. 12 gives a top view.

### Detailed Description of Embodiment(s)

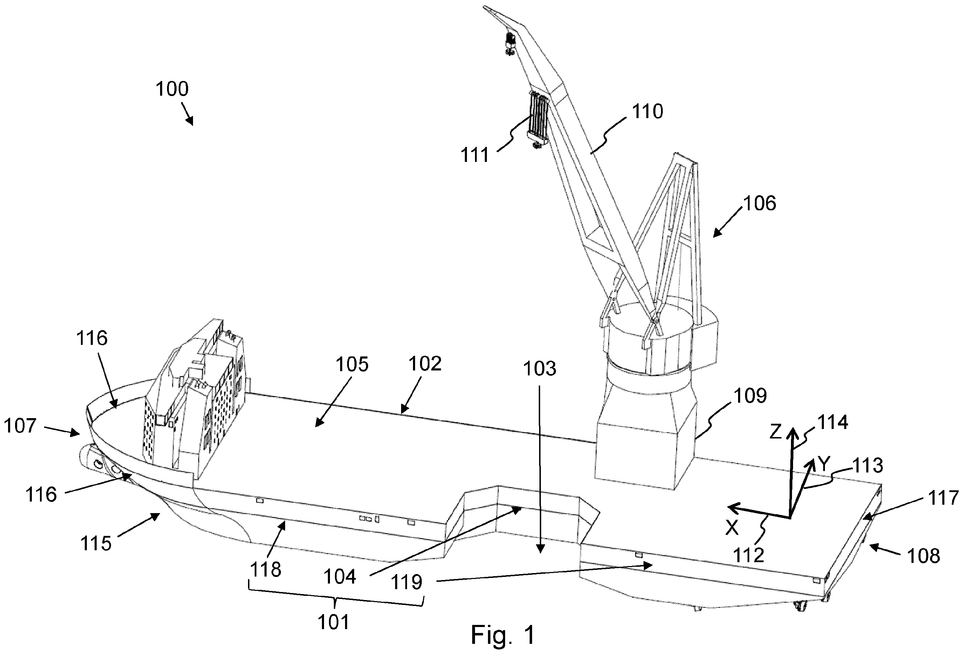

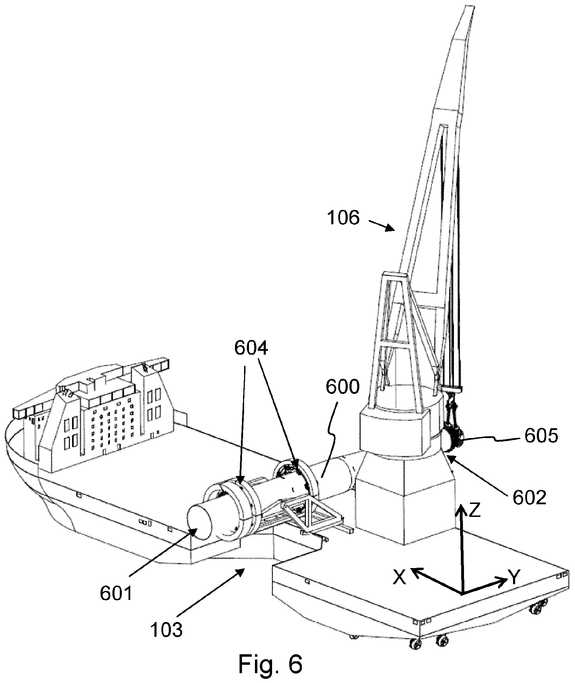

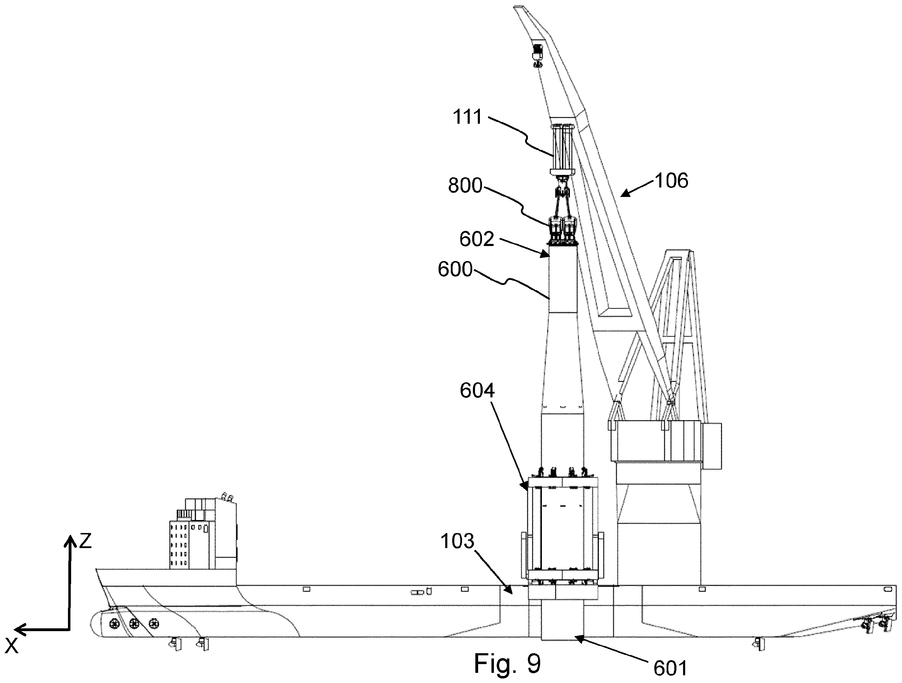

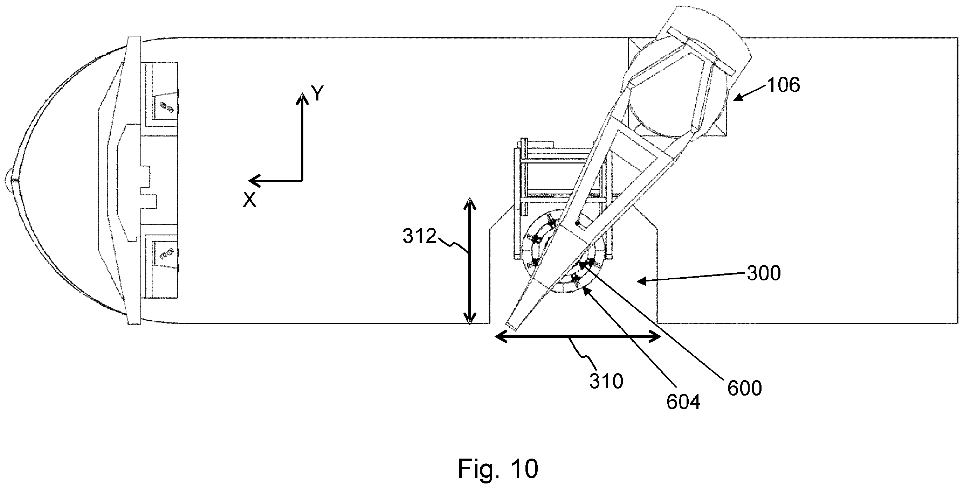

Fig. 1 to Fig. 3 show a vessel 100, suitable for installing an elongated element 600 in an underwater bottom, wherein the use of the vessel 100 during installation is further illustrated in Fig. 6 to Fig. 10. In the shown embodiment, the elongated element is a monopile 600 serving as a foundation structure of an offshore wind turbine.

The vessel 100 comprises a hull 115 and a deck 105. The deck 105 extends in a horizontal plane, defined by the longitudinal direction or X-direction 112 and transverse direction or Y-direction 113. The vessel 100 further extends according to a vertical or Z-direction 114. The hull 115 comprises a front wall 116 located at the bow 107 of the vessel 100, and a back wall 117 located at the stern 108 of the vessel 100. The front wall 116 comprises two portions, each having a curved edge 309, which come together at the front side of the hull, while the back wall 117 comprises a straight edge 310 substantially parallel to the transverse direction. The hull 115 further comprises two opposing side walls 101, 102, each connected to the front wall 116 and back wall 117. The second side wall 102 comprises a straight edge 308, substantially parallel to the longitudinal direction 112. A hoisting device or crane 106 is positioned on the deck 105. The hoisting device 106 comprises a crane base 109, and a boom 110 provided with hoisting cables 111.

The hull 115 of the vessel 100 comprises a recess 103, provided in the first side wall 101. The first side wall 101 thus consists of a recessed portion 104, and a non-recessed portion 118, 119, wherein the non-recessed portion consists of a part 118, at one side of the recess 103, and another part 119 at the other side of the recess 103. The non-recessed portion 118, 119 comprises straight edges 301, 307 substantially parallel to the longitudinal direction 112.

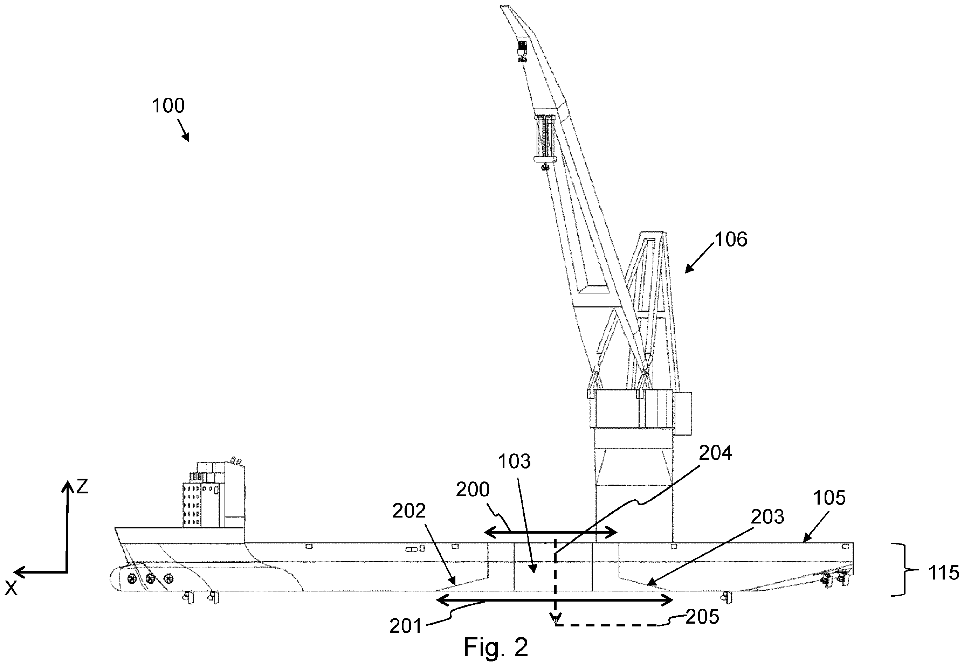

The recessed portion 104 of the side wall defines a channel 103 ending at its top end in a cutout 300 in the deck 105. The cutout 300 defines a first open end of the channel 103, while a second open end is found at a lower height position, such that the channel 103 provides vertical access 204 from the cutout 300 to the underwater bottom 205. The latter is schematically indicated in Fig. 2, for illustration purposes only; in reality a much larger water depth typically applies. In particular, the recess 103 in the side wall 101 allows to lower a monopile 600 towards and into the underwater bottom via the channel, while the monopile 600 is connected at one end to the hoisting device 106. The recess 103 and hoisting device 106 are thus positioned such that lowering of the monopile 600 may happen while being connected with its upper end to the hoisting device 106.

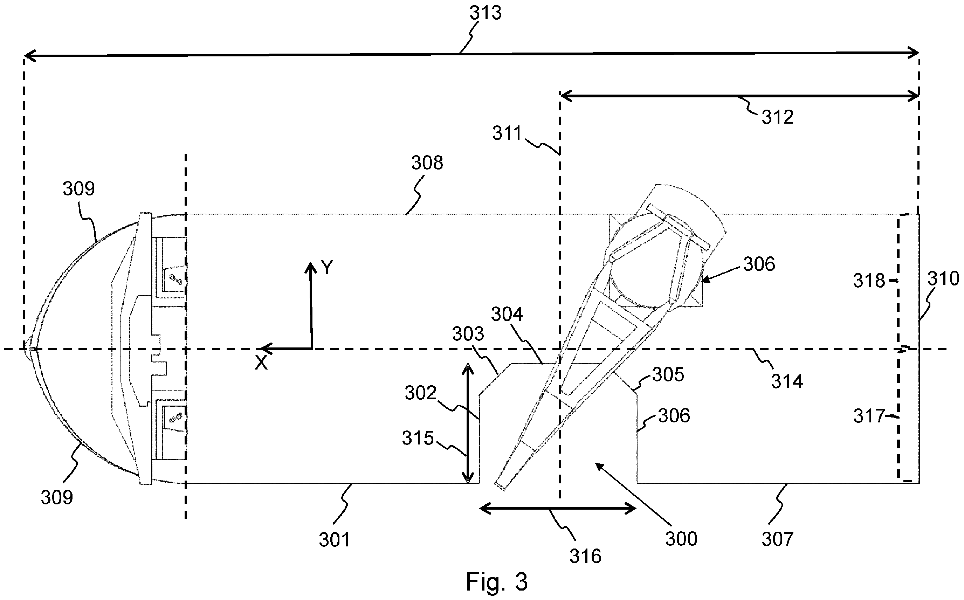

Fig. 3 shows that the cutout 300 is bordered by an edge consisting of a central edge 304 parallel to the X-direction, two angled edges 303, 305, and two opposing side edges 302, 306 parallel to the Y-direction. As is indicated in Fig. 3, the width 316 of the cutout 300 is measured in X-direction, at the transverse position furthest away from the longitudinal centreline 314. Preferably, the width 316 is at least 35 meter, more preferably at least 40 meter, more preferably at least 45 meter. The depth 315 of the cutout 300 is measured in Y-direction. In the shown embodiment, the depth 315 is such that the cutout 300 does not extend beyond the longitudinal centreline 314, so that the central longitudinal beam or bulkhead of the vessel is not interrupted by the recess. The area of the cutout 300 is thus completely located in the first longitudinal half 317 of the deck 105.

Fig. 3 further indicates the length 313 of the vessel 100, and the transverse middle line 311 of the cutout 300, both being at deck level. The distance 312 between the transverse middle line 311 and the stern 108, measured at deck level and along the longitudinal centreline, defines the location spot of the cutout 300. In the shown embodiment, the cutout 300 is at a distance 312 of about 40% of the vessel's length 313. Such a position is advantageous as it allows for limited pitch motions of the floating vessel, and minimal interference of water flow originating from the thrusters. In other embodiments different location spots may apply. Preferably the distance 312 is between 15% and 65% of the vessel's length 313, more preferably between 20% and 55%, more preferably between 25% and 45%.

Finally, Fig. 3 shows that, whereas the cutout 300 is completely located in the first longitudinal half 317 of the deck 105, the crane's base 109 or footprint 306 is completely located in the second half 318, thereby avoiding structural issues. Conversely, with regard to the position according to the longitudinal direction, there is a partial overlap in the area of the crane's footprint 306 and the area of cutout 300.

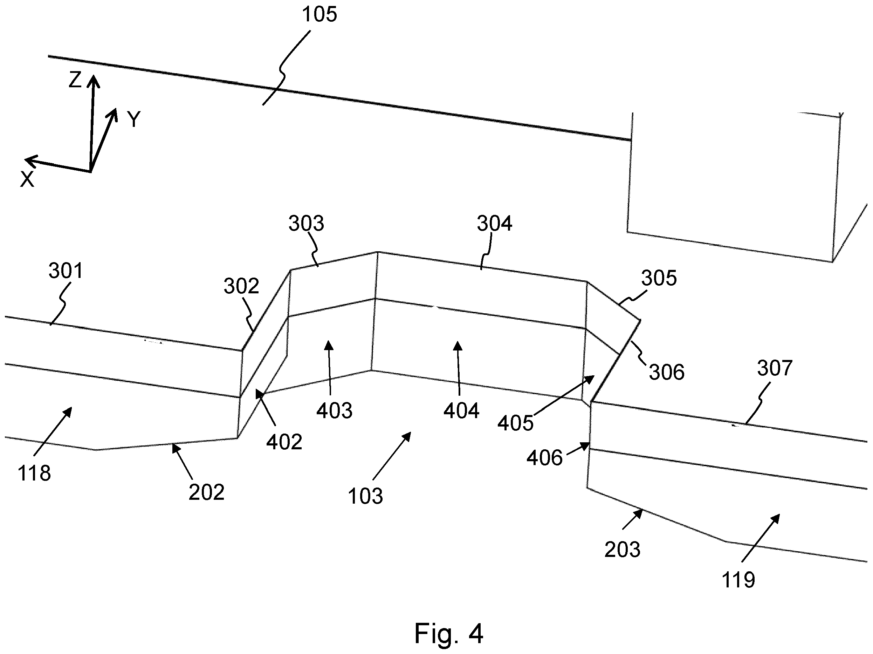

Fig. 4 gives a closer view of the recess 103. The recessed portion 104 of the side wall 101 comprises two opposing wall parts 402, 406, which are substantially parallel to a YZ-plane, each extending from the first side wall 101 towards the second side wall 102. The recessed portion 104 further comprises a central wall part 404 substantially parallel to an XZ-plane. The opposing wall parts 402, 406 each are connected to the central wall part 404, via intermediate wall parts 403, 405, of which the direction is substantially parallel to the Z-direction but angled with respect to the X- and Y-direction.

Fig. 4 further shows that the recessed portion 104 comprises inclined surfaces 202, 203, the latter also visible in Fig. 2. The inclined surfaces 202, 203 are connected to the respective opposing wall parts 402, 406, and are angled with respect to a vertical plane and with respect to a horizontal plane. Due to the presence of these inclined surfaces 202, 203, the recessed channel 103 has an increasing width towards the bottom end of the channel. Indeed, the first portion of the channel 103, located between the opposing wall parts 402, 406 has a constant width 200, while the second portion of the channel 103, defined by the inclined surfaces 202, 203, is tapered, with a width increasing from width 200 to width 201. The latter widths 200, 201 are measured in X-direction, at the transverse position furthest away from the longitudinal centreline 314. The inclined surfaces 202, 203 allow for a reduced flow resistance during sailing, similar to the hull design at the bow and stern.

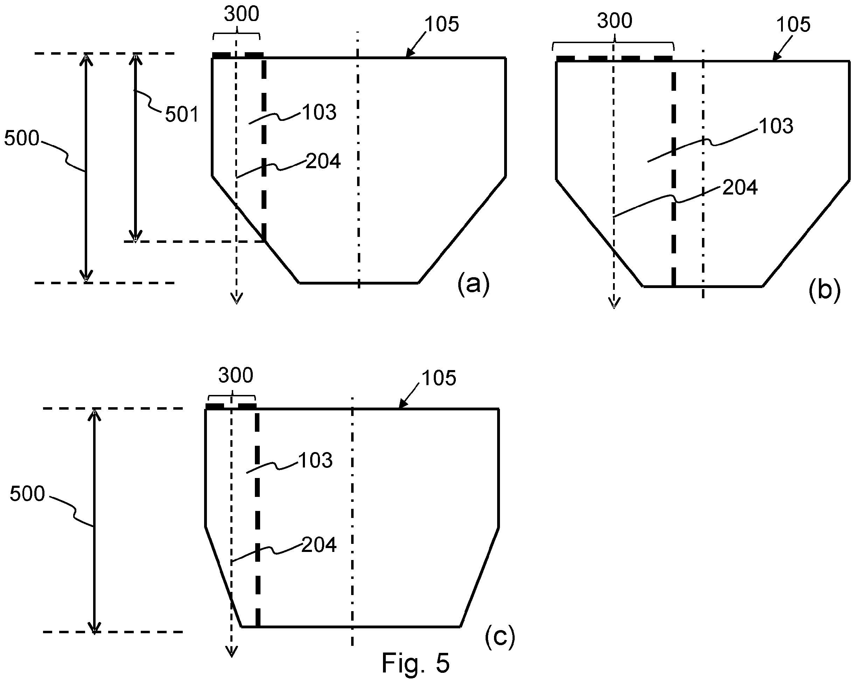

Fig. 5 illustrates that, according to various embodiments, the recessed channel 103 may extend over the full height 500 of the hull, or only over a portion thereof. In any of these embodiments, the channel 103 provides vertical access 204 from the cutout 300 to the underwater bottom. In Fig. 5(a), the channel 103 starts at the cutout 300 in the deck, and ends at a lower position, but the channel has a smaller height 501 than the hull's height 500. Conversely, in Fig. 5(b) and Fig. 5(c), the height of the channel 103 equals the hull's height 500, due to the cutout extending further in transverse direction, or due to the design of the hull respectively.

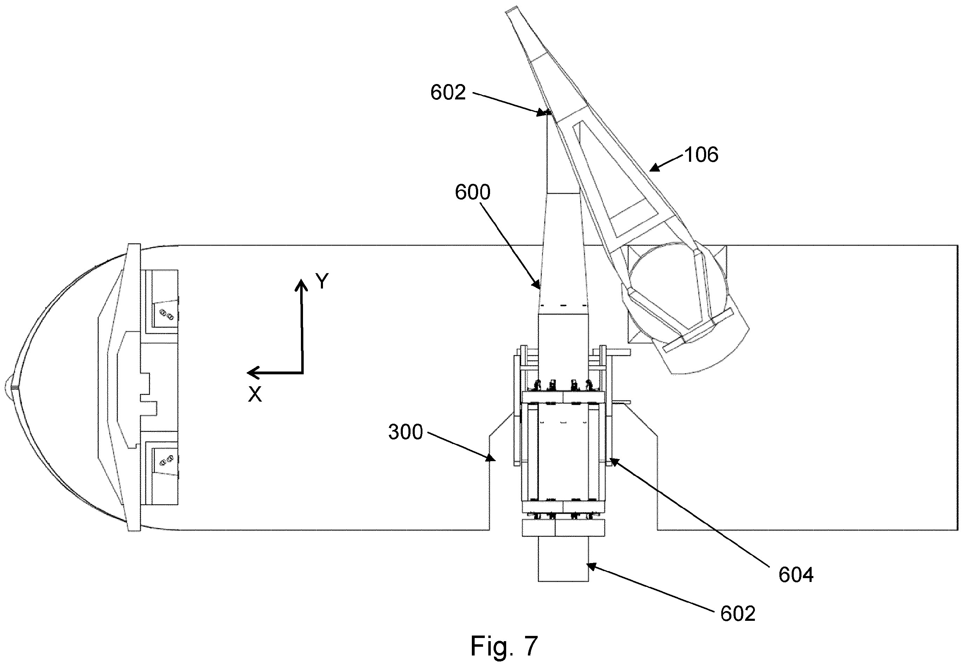

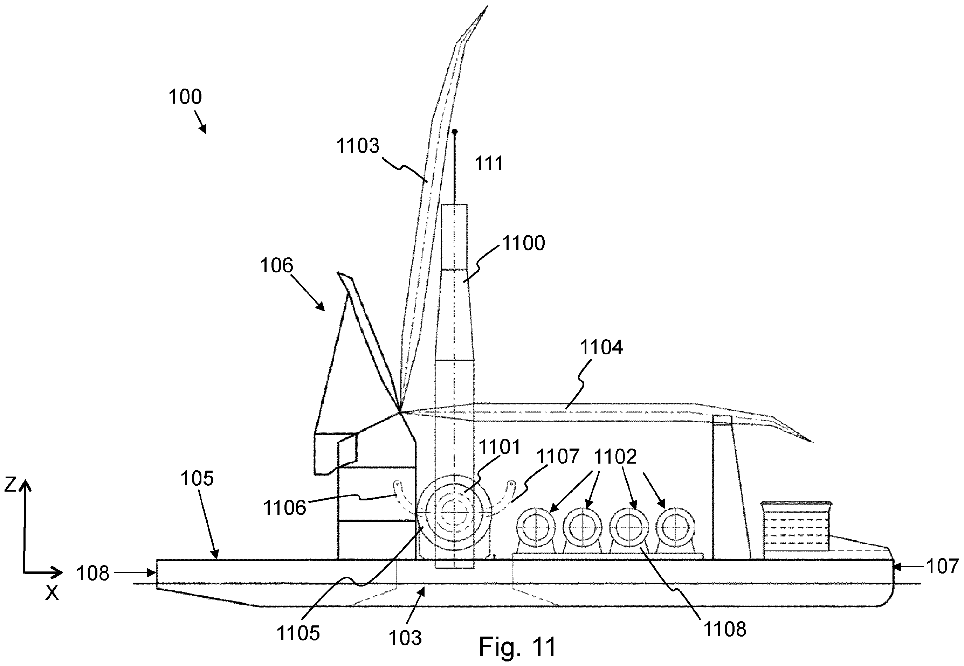

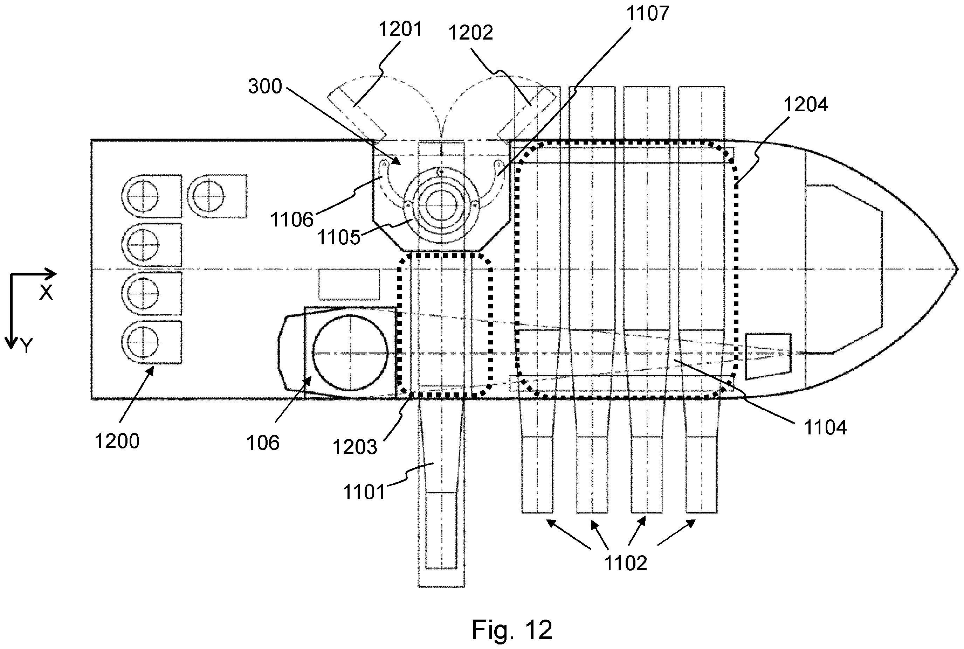

Fig. 6 and Fig. 7 illustrate the use of the vessel 100, wherein a state is shown before upending of a monopile 600. The monopile 600 has a circular cross section, which is larger at the bottom end 601 than at the top end 602. The monopile 600 is in a lying position on the deck 105, wherein its central axis is substantially horizontal, and substantially parallel to the transverse Y-direction. At its bottom side 601, a portion of the monopile 600 hangs over the cutout 300 in the deck, and at its top side 602, a portion of the monopile 600 hangs over the second side wall 102. The monopile 600 is held at its top end 602 by the crane 106, by means of a coupling tool 605. The state before upending is further illustrated in Fig. 11 and Fig. 12, with a monopile 1101 in lying condition.

In the shown state, the monopile 600 is placed in a upending and gripping device 604. In the shown embodiment, the upending and gripping function are integrated in a single device 604. In other possible embodiments, like e.g. disclosed in EP3517479, a gripping device separate from the upending device is provided, instead of an integrated device 604. A lower portion of the monopile 600 is supported in a cage-like structure of the upending and gripping device 604, and the device 604 is pivotably connected to the deck 105. As is illustrated in Fig. 11 and Fig. 12, gripping of the monopile is performed by means of an openable and re-closable gripping structure 1105. In closed condition, two gripping arms 1106, 1107 of the gripping structure 1105 together form a closed ring structure 1105 placed around the circumference of the monopile 600 or 1100.

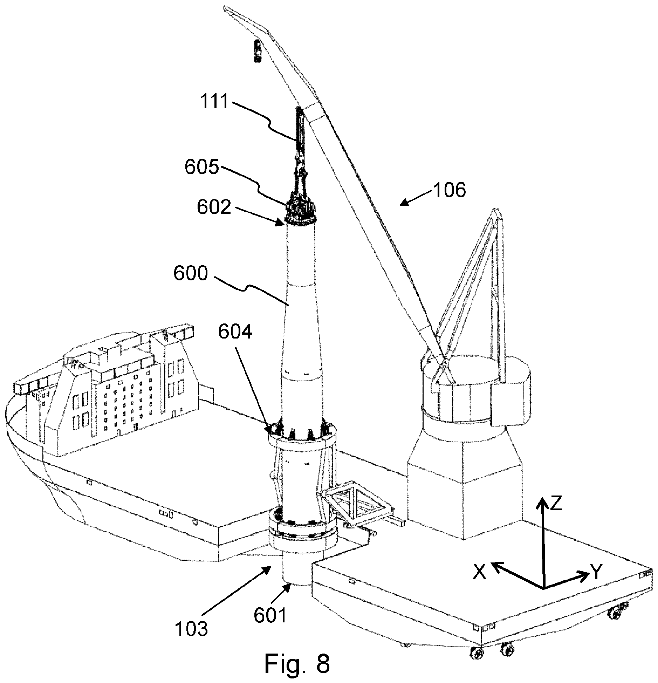

Starting from the state of Fig. 6 and Fig. 7, the monopile 600 may be upended, thereby reaching a state like shown in Fig. 8 to Fig. 10. During upending, the monopile 600 is pivoted from a lying towards an upright position, the second end 602 of the monopile 600 thereby being suspended from the crane 106. After upending, the monopile 600 hangs on the crane 106, in a substantially vertical position. Next, the monopile 600 may be lowered, wherein its second end 602 is suspended from the crane 106, by means of the same coupling tool 605 as used during upending.

As shown in Fig. 8 to Fig. 10, and in Fig. 11 and Fig. 12, during lowering the monopile 600, 1100, it is positioned inside the recess 103. The width 316 and depth 315 of the cutout 300, and corresponding width and depth of the recessed channel 103, are thus large enough such that the monopile 600 fits within, without extending beyond the non-recessed portion 118, 119 of the side wall 101. During lowering the monopile 600, 1100, the monopile is guided by the gripping device 604, wherein the closed gripping structure 1105 engages with the lateral surface of the monopile, thereby controlling its longitudinal and transverse position, and its orientation with respect to the vertical direction. The figures further show that during lowering the monopile 600, 1100, the gripping structure 1105 is positioned inside the recess 103, without extending beyond the non-recessed portion 118, 119 of the side wall 101. In this, some margin is left between the outer circumference of the gripping structure 1105 and the edges of the recess 103, thereby taking into account the tolerances within which a dynamic positioning system may control the position of the floating vessel. Finally, the recess 103 allows the gripping structure 1105 to be opened while being positioned inside the recess 103, as is illustrated by the opened arms 1106, 1107 in Fig. 12.

Fig. 11 and Fig. 12 further schematically illustrate the vessel 100, and show a monopile 1101 in lying condition, before upending, as well as in upright condition 1100, while being suspended from the crane 106. The boom of the crane 106 may be varied between a state 1103 for suspending the monopile 1101, and a horizontal state 1104. The horizontal state 1104 corresponds to the crane's storage position during sailing; for taking up monopiles 1102 from the deck, the boom is in a position between the state 1104 and state 1103. Four monopile 1102 are stored on the deck 105, while being supported by support structures 1108. The monopiles 1102 are stored in a storage zone 1204 at the deck 105, located between the cutout 300 and the front wall 116 of the hull. The monopiles 1102 are stored in lying condition, with their central axis extending in Y-direction. Apart from monopiles 1102, also a number of transition pieces 1200 are stored on the deck 105, the transition pieces 1200 being in upright condition.

The deck further comprises an installation area 1203, providing room for positioning a monopile 1101 before upending and lowering via the recess 103. For this reason, the crane 106 cannot be positioned at the same longitudinal position as the cutout 300. However, in longitudinal direction, the footprint of the crane 106 and the area of the cutout 300 partly overlap, thereby allowing the crane 104 to take up the monopile 1102 being furthest away from the crane base.

Finally, Fig. 12 shows that the vessel 100 comprises two doors 1201, 1202, which can be closed during sailing, and opened during installation of a monopile. The first door 1201 is pivotably connected to the hull, at the location where the recessed portion 104 of the side wall 101 connects to the non-recessed portion 119, and can be opened in anticlockwise direction. Similarly, the second door 1202 is pivotably connected to the hull, at the location where the recessed portion 104 of the side wall 101 connects to the non-recessed portion 118, and can be opened in clockwise direction. In closed condition, the two doors 1201, 1202 together shield the recess 103, thereby decreasing flow resistance during sailing.

We will now describe a possible embodiment of an installation method, wherein the vessel 100 is used for installing a monopile 600 in an underwater bottom.

In a first step of the method, a monopile 600 is taken up from the storage zone 1204 at the deck 105, by means of the hoisting device 106. Next, the hoisting device 106 brings the monopile 600 to the installation area 1203 at the deck 105, and places the monopile 600 with its lower portion positioned onto the opened cage-like structure of the upending and gripping device 604, after which the cage-like structure is closed. Moreover, the coupling tool 605 is attached to the hoisting cables 111 of the hoisting device 106, and the coupling tool 605 is connected to the second end 602 of the lying monopile 600, thereby arriving at the state shown in Fig. 6 and Fig. 7.

In a next step, the monopile 600 is upended by the hoisting device 106, wherein the upending device 604 rotates around its pivot, and the monopile 600 is brought into upright position, being suspended from the hoisting device 106. In the shown embodiment, the gripping structure - being integrated in device 604 - is closed during upending. In other possible embodiments, wherein the gripping device is separate from the upending device, the arms of the gripping structure may be opened during upending. In this way, the monopile can pass the gripping structure during upending, and when the monopile is relatively close to vertical direction, the gripping structure is closed. Upending then continues until reaching vertical direction of the monopile, thereby arriving at the state shown in Fig. 8 to Fig. 10.

In a subsequent step, the bottom side of the cage-like structure of the upending and gripping device 604 is opened, and the monopile 600 is lowered in the water while being positioned inside the recess 103, and while being suspended from the hoisting device 106. During lowering, the monopile 600 is guided by the closed gripping structure 1105, thereby controlling the transverse and longitudinal position of the monopile 600.

During lowering, the bottom end 601 of the monopile 600 approaches the underwater bottom 205, until contacting the underwater bottom. Next, the first end 601 of the monopile 600 penetrates the bottom under its own weight, while its second 602 is still connected to the hoisting device 106, and while still being guided by the closed gripping structure. During this stage, the monopile 600 is partly supported by the bottom structure, such that the crane 106 is not carrying the full weight of the monopile 600 anymore. However, if a pile run occurs, e.g. due to a sudden decrease in soil resistance, the full weight of the monopile 600 may be transferred back to the hoisting device 106 again, thereby exerting a shock load on the hoisting device 106. Due to the installation position of the monopile 600, inside the recess 103, such a shock load will not result in an unacceptable list.

In a next step, the coupling tool 605 is disconnected from the monopile 600, such that the monopile 600 is decoupled from the hoisting device 106. Next, the hoisting device 106 is used to pick up a hammering tool from the deck 105, the hammering tool thus being suspended from the hoisting device 106. By means of the hoisting device 106, the hammering tool is placed on top of the second end 602 of the monopile 600. Afterwards, the monopile 600 is hammered into the bottom, while the hammering tool is still connected to the hoisting device 106, and the monopile 600 is still guided by the gripping structure. During placement of the hammering tool, or during hammering, a pile run may occur, wherein the weight of the hammering tool is suddenly transferred to the hoisting device. Again, due to the installation position inside the recess, this will not result in an unacceptable list.

When the monopile 600 has penetrated the underwater bottom to a certain extent, the hammering is discontinued and the arms 1106, 1107 of the gripping structure 1105 are opened. Afterwards, hammering may be continued, until the final desired penetration depth is reached.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Vessel (100) suitable for installing an elongated element (600) in an underwater bottom (205), the vessel (100) comprising:
- a hull (115) comprising a front wall (116) at the bow (107) of the vessel, a back wall (117) at the stern (108) of the vessel, and two opposing side walls (101, 102), positioned between the front wall (116) and the back wall (117);
- a deck (105) adapted to support one or more elongated elements (600), the deck (105) lying in a horizontal plane extending in longitudinal direction (112), from bow to stern, and in transverse direction (113), from side to side, the vertical direction (114) being perpendicular to the horizontal plane;
- a hoisting device (106) positioned on the deck (105), adapted to hold the elongated element (600) at one end (602) while lowering the elongated element (600),
**CHARACTERIZED IN THAT**:
the hull (115) comprises a recess (103) provided in a side wall (101), the recessed portion (104) of the side wall defining a channel (103) ending at its top end in a cutout (300) in the deck (105), and providing vertical access (204) from the cutout (300) to the underwater bottom (205),
the recess (103) in the side wall (101) allowing the elongated element (600) to be lowered into the underwater bottom via the channel (103), while being connected at one end (602) to the hoisting device (106).

2. Vessel (100) according to any of the preceding claims,
wherein the longitudinal position of the cutout (300) in the deck (105) is such that, measured along the longitudinal centreline (314) of the vessel (100), the distance (312) between the stern (108) of the vessel and the transverse middle line (311) of the cutout (300) is between 10% of the vessel's length (313) and 75% of the vessel's length (313), preferably between 15% and 65%, more preferably between 20% and 55%, more preferably between 25% and 45%.

3. Vessel (100) according to any of the preceding claims,
wherein in transverse direction (113), the recess (103) does not extend beyond the longitudinal centreline (314) of the vessel (100).

4. Vessel (100) according to any of the preceding claims,
wherein the cutout (300) in the deck (105) is fully or mainly located in the deck zone (317) at one side of the longitudinal centreline (314) of the vessel, and the base (109) of the hoisting device (106) is fully or mainly located in the deck zone (318) at the other side of the longitudinal centreline (314).

5. Vessel (100) according to any of the preceding claims,
wherein the width (200, 201) of the channel (103) defined by the recess increases, at least over a portion of the height of the channel, towards the bottom end of the channel, the width (200, 201) of the channel being measured in longitudinal direction (112) of the vessel, and the height of the channel being measured in vertical direction (114) of the vessel.

6. Vessel (100) according to claim 5,
wherein the channel (103) comprises, in vertical direction (114) from the top end at the deck (105) towards the bottom end, a first portion and an adjacent second portion, the first portion having a constant width (200) over the height, and the second portion having a continuously increasing width (200, 201) towards the bottom end of the channel (103).

7. Vessel (100) according to any of the preceding claims,
wherein the vessel (100) is suitable for installing elongated elements (600) of which the largest cross section along the length, amounts up to a maximum section size,
and wherein the recess (103) is adapted for positioning an elongated element (600) of maximum section size inside the recess (103), such that in transverse direction (113), the elongated element (600) does not extend beyond the non-recessed portion (118, 119) of the side wall (101), at least over a portion of the height of the hull (115).

8. Vessel (100) according to any of the preceding claims,
wherein the vessel (100) comprises a gripping device, connected to the hull (115) and/or the deck (105), adapted to guide the elongated element (600) during installation, the gripping device comprising an openable and re-closable gripping structure (1105) adapted to, in closed condition, at least partially surround the circumference of the elongated element (600), while engaging with the lateral surface of the elongated element (600),
and wherein the recess (103) is adapted for positioning the closed gripping structure (1105) inside the channel (103) defined by the recess, such that in transverse direction (113), the gripping structure (1105) does not extend beyond the non-recessed portion (118, 119) of the side wall (101).

9. Vessel (100) according to claim 8,
wherein the recess (103) allows the gripping structure (1105) to be opened while being positioned inside the channel (103) defined by the recess.

10. Vessel (100) according to claim 9,
wherein the vessel (100) comprises a dynamic positioning or mooring system, adapted to control the position of vessel (100) while floating, wherein the positioning accuracy is such that an offset applies between the actual position of the vessel and the target position,
and wherein the size of the recess (103) is such that, upon occurring maximal offset in the vessel's position, a margin exists between the outer contour of the closed gripping structure (1105) and the recessed side wall (104).

11. Vessel (100) according to any of the preceding claims,
wherein the cutout (300) in the deck (105) is delimited by an edge comprising a central edge (304) parallel to the longitudinal direction of the vessel, and two opposing side edges (302, 306) parallel to the transverse direction of the vessel, each of the side edges (302, 306) connected to the central edge (304) via an intermediate straight edge (303, 305), of which the direction is angled with respect to the longitudinal and transverse direction.

12. Vessel (100) according to any of the preceding claims,
wherein the vessel (100) comprises one or more doors (1201, 1202), adapted to be closed during sailing, thereby at least partly shielding the recess (103) in the side wall (101).

13. Vessel (100) according to claim 12,
wherein the vessel (100) comprises two doors (1201, 1202), each of the doors being connected to the side wall (101) and being pivotable around a vertical axis, the two doors (1201, 1202) being adapted to, in closed condition, together at least partly shield the recess (103).

14. Vessel (100) according to any of the preceding claims,
wherein the deck (105) comprises an area (1203), in transverse direction extending between the recessed side wall (104) and the opposing side wall (102), which provides room for positioning an elongated element (600) before installation, with its axis in transverse direction.

15. Vessel (100) according to any of the preceding claims,
wherein the elongated element (600) is a foundation structure, e.g. a monopile of a wind turbine.

16. Method for installing an elongated element (600) in an underwater bottom (205) from a floating vessel (100), the method comprising:
- providing a vessel (100) according to any of the preceding claims;
- providing an elongated element (600) extending in length direction between a first end (601) and a second end (602);
- lowering the elongated element (600) via the channel (103), the elongated element (600) at least partially being positioned inside the recess (103), thereby inserting the first end (601) of the elongated element (600) into the underwater bottom, while the second end (602) is connected to the hoisting device (106).
